# EUROPEAN PATENT SPECIFICATION

(11) **EP 0 599 504 B1**
(45) Date of publication and mention of the grant of the patent: **16.12.1998**
(21) Application number: 93308795.9
(22) Date of filing: 03.11.1993
(51) Int. Cl.: G06F 13/40, G06F 1/18

(54) **Mass storage subsystem**
Massenspeichersubsystem
Sous-système de mémoire de masse

(30) Priority: 19.11.1992 GB 9224223
(43) Date of publication of application: 01.06.1994
(73) Proprietor: INTERNATIONAL COMPUTERS LIMITED, Putney, London, SW15 1SW (GB)
(72) Inventor: Crane, David Paul, Reading, Berkshire RG2 8JD (GB); Martin, Michael William, Camberley, Surrey GU16 5QX (GB); Hayes, Philip John Wilson, East Horsley, Surrey KT24 5BN (GB)
(74) Representative: Guyatt, Derek Charles

(56) References cited:
- EP-A- 0 242 970
- EP-A- 0 464 658
- WO-A-87/02154
- GB-A- 2 192 098
- US-A- 4 918 572

## Description

### Background to the Invention

This invention relates to a mass storage subsystem for use in a data processing system.

A mass storage subsystem generally comprises a number of data storage modules, such as disk units, connected together by way of a bus, such as for example the standard SCSI (small computer system interface) bus. The data storage modules generally have a standard form factor, so that they are readily interchangeable.

Document EP-A-464658 dicloses a massive storage subsystem comprising media and support bays in which disk or tape modules and support modules are mounted respectively.

It has been proposed to provide a dedicated processor for performing operations associated with such a mass storage subsystem. For example, the ICL SCAFS processor supplied by International Computers Limited is a dedicated search processor which can perform associative searches on data stored in a mass storage subsystem. This processor is physically located within the host computer e.g. in a spare slot in the host's card cage.

The object of the present invention is to improve on this prior arrangement.

### Summary of the Invention

According to the invention there is provided a mass storage subsystem comprising a mounting structure having a plurality of substantially identical mounting slots, a plurality of data storage modules mounted in respective ones of said mounting slots, and at least one dedicated processor module for performing processing operations associated with the data storage modules, wherein the processor module is mounted in a further one of said substantially identical mounting slots.

It can be seen that, in the arrangement according to the invention, the processor fits in the mass storage subsystem in the same manner as the data storage units: that is, it fits physically where it already fits architecturally. This eases installation and integration problems.

### Brief Description of the Drawings

Figure 1 shows a disk module.

Figure 2 shows a processor module.

Figure 3 shows a housing for three disk modules or processor modules.

Figure 4 shows the housing with three disk modules mounted in it.

Figure 5 is a schematic representation of a mass storage subsystem comprising two such housings.

Figure 6 shows an alternative form of housing.

### Description of an Embodiment of the Invention

Mass storage subsystems in accordance with the invention will now be described by way of example with reference to the accompanying drawings.

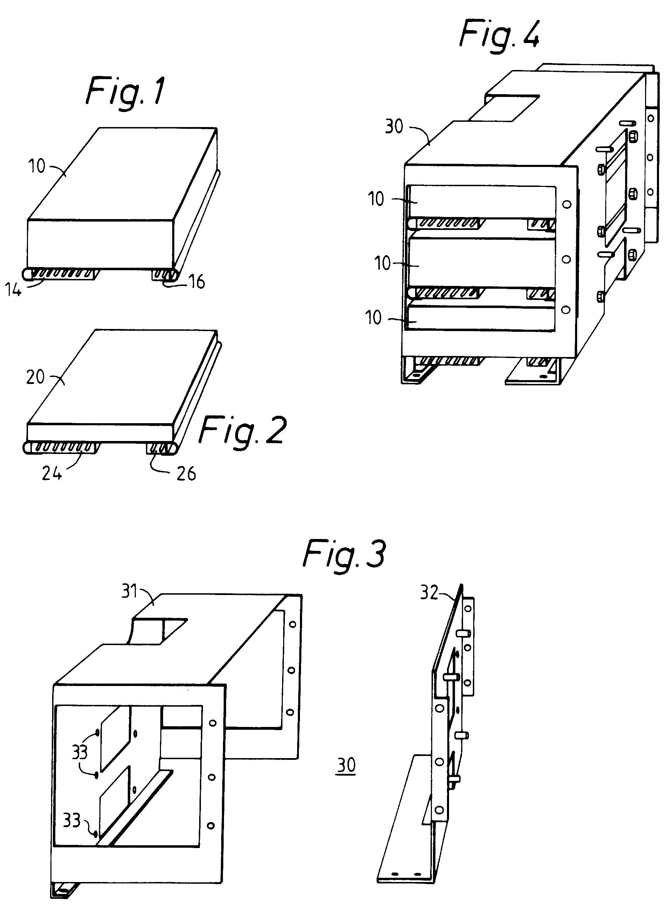

Referring to Figure 1 this shows a disk module 10. The disk module is a standard 3.5" (9 cm) HH (half height) form factor module. The module 10 has dimensions 5.75" (15.7 cm ) x 4.0" (10.2 cm) x 1.62" (4.2 cm). The module has mounting holes for mounting it in a mounting frame, as will be described, and carries a standard SCSI connector 14 and d.c. power connector 16 along one edge.

Figure 2 shows a processor module 20. The processor module is of the same plan dimensions (15.7 x 10.2 cm) as one of the disk modules, and has a third dimension of 0.62" (1.6 cm). The processor module has mounting holes, an SCSI connecter 24, and a d.c. power connector 26, in the same standard positions as the disk modules. The processor module comprises a dedicated search processor unit, for performing searches on data held in disk modules, and in this example is an ICL SCAFS processor. The internal structure of the search processor forms no part of the present invention and so will not be described in detail herein.

Figure 3 shows a mounting frame, referred to herein as a clamshell 30. The clamshell comprises two metal portions 31,32. Portion 31 has mounting holes 33 defining three mounting slots, each of which can receive a disk module 10 or a processor module 20.

Figure 4 shows the clamshell 30 with three disk modules 10 mounted in it. Each disk module is attached to the portion 31 by screws passing through the mounting holes 33. The two portions 31,32 of the clamshell are secured together by screws, and each module is also secured to the portion 32 by screws. Processor modules 20 may be mounted in the clamshell in a similar manner.

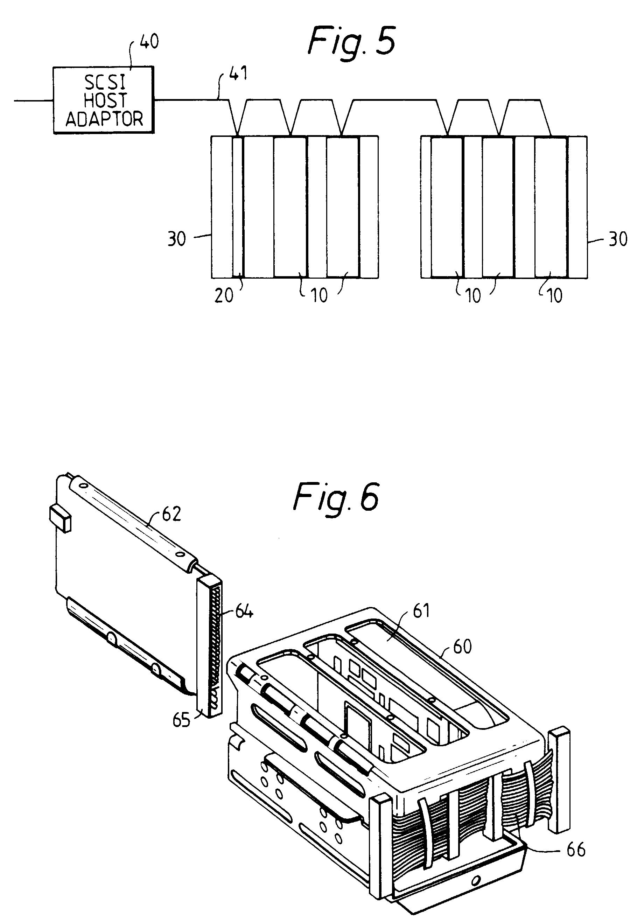

Referring now to Figure 5, this shows a mass storage subsystem comprising two clamshells 30, each having three identical slots. Thus, the subsystem has a total of six HH slots. As shown, five of these slots are occupied by disk modules 10. The remaining slot has a processor module 20 mounted in it. The storage subsystem is connected to a host processor by way of an SCSI host adaptor 40 and an SCSI bus 41. The SCSI bus consists of a flexible multi-way cable, having a number of SCSI connectors attached to it which mate with the SCSI connectors 14,24 on the disk modules 10 and processor module 20. As shown, the bus connects the processor module 20 to the five disk modules 10. Thus, the search processor is able to initiate search operations on the data held in the disk modules by means of messages sent over the SCSI bus.

Figure 6 shows an alternative form of mounting frame 60 in which disk modules 61 and processor modules 62 are plugged into mounting slots in the mounting frame, rather than being clamped between portions of the frame as in Figure 4. As before, each module has an SCSI connector 64 and a d.c. power connector 65. The SCSI connectors are all linked to an SCSI bus comprising a flexible multi-way cable 66.

It will be appreciated that many other alternative configurations are possible. For example, two processor modules may be mounted together in one HH slot, each processor module being connected by way of a separate SCSI bus to a separate set of disk modules.

Alternatively, a combined processor/disk module may be mounted in one HH slot, this combined processor/disk module comprising an LP (low profile) form factor disk module with a processor module mounted on top of it. An LP form factor module has the same dimensions as an HH form factor module, except that the third dimension is 1.0" (2.6 cm) instead of 1.62".

In another alternative form of the invention, the mounting slots may all be LP (low profile) form factor slots, each holding either an LP disk module or a processor module.

It is not necessary for the processor module to be at the end of the SCSI bus as in the drawings: it could be positioned between two disk modules.

## Claims

1. A mass storage subsystem comprising a mounting structure (30) having a plurality of substantially identical mounting slots, a plurality of data storage modules (10) mounted in respective ones of said mounting slots, and at least one dedicated processor module (20) for performing processing operations associated with the data storage modules, wherein the processor module (20) is mounted in a further one of said substantially identical mounting slots.

2. A subsystem according to Claim 1 wherein said processor module (20) is a dedicated search processor for performing searches on data in the storage modules (10).

3. A subsystem according to Claim 1 or 2 wherein the processor module (20) and storage modules (10) are interconnected by a bus (41).

4. A subsystem according to Claim 3 wherein the processor module (20) and storage modules (10) all have identical electrical connections (14, 24) to said bus (41).

5. A subsystem according to any preceding claim wherein said storage modules (10) are disk storage modules.

6. A subsystem according to any preceding claim wherein a plurality of processor modules (20) are mounted in a single one of said mounting slots.

7. A subsystem according to any preceding claim including at least one combined processor/storage module mounted in one of said mounting slots.

## Patentansprüche

1. Massenspeicher-Subsystem mit einem Befestigungsaufbau (30), der eine Mehrzahl von im wesentlichen identischen Befestigungsschlitzen, eine Mehrzahl von Datenspeichermodulen (10), die in entsprechenden Befestigungsschlitzen befestigt sind, und mindestens einen zugehörigen Prozessormodul (20) zur Durchführung von Verarbeitungsoperationen, die den Datenspeichermodulen zugeordnet sind, aufweist, bei dem das Prozessormodul (20) in einem weiteren der im wesentlichen identischen Befestigungsschlitze befestigt ist.

2. Subsystem nach Anspruch 1, bei dem das Prozessormodul (20) ein zugehöriger Suchprozessor zur Durchführung von Recherchen nach Daten in den Speichermodulen (10) ist.

3. Subsystem nach Anspruch 1 oder 2, bei dem das Prozessormodul (20) und Speichermodule (10) miteinander über eine Bus-Leitung (41) verbunden sind.

4. Subsystem nach Anspruch 3, bei dem das Prozessormodul (20) und die Speichermodule (10) alle identische elektrische Verbindungen (14, 24) zu der Bus-Leitung (41) haben.

5. Subsystem nach einem der vorausgehenden Ansprüche, bei dem die Speichermodule (10) Plattenspeichermodule sind.

6. Subsystem nach einem der vorausgehenden Ansprüche, bei dem eine Mehrzahl von Prozessormodulen (20) in einem einzigen der Befestigungsschlitze befestigt sind.

7. Subsystem nach einem der vorausgehenden Ansprüche, mit mindestens einem kombinierten Prozessor/Speichermodul, das in einem der Befestigungsschlitze befestigt ist.

## Revendications

1. Sous-système de mémoire de masse comprenant une structure de montage (30) ayant plusieurs logements pratiquement identiques de montage, plusieurs modules (10) de mémorisation de données montés dans des logements respectifs parmi les logements de montage, et au moins un module processeur dédié (20) destiné à effectuer des opérations de traitement associées aux modules de mémorisation de données, dans lequel le module processeur (20) est monté dans un autre logement parmi les logements de montage pratiquement identiques.

2. Sous-système selon la revendication 1, dans lequel le module processeur (20) est un processeur dédié de recherche destiné à effectuer des recherches sur des données contenues dans les modules de mémorisation (10).

3. Sous-système selon la revendication 1 ou 2, dans lequel le module processeur (20) et les modules de mémorisation (10) sont interconnectés par un bus (41).

4. Sous-système selon la revendication 3, dans lequel le module processeur (20) et les modules (10) de mémorisation ont tous des connexions électriques identiques (14, 24) avec le bus (41).

5. Sous-système selon l'une quelconque des revendications précédentes, dans lequel les modules de mémorisation (10) sont des modules de mémorisation à disque.

6. Sous-système selon l'une quelconque des revendications précédentes, dans lequel plusieurs modules processeurs (20) sont montés dans un seul logement parmi les logements de montage.

7. Sous-système selon l'une quelconque des revendications précédentes, comprenant au moins un module combiné processeur et de mémorisation monté dans l'un des logements de montage.
